# EUROPEAN PATENT APPLICATION

(11) **EP 4 841 266 A1**
(43) Date of publication of application: **18.11.2026**
(21) Application number: 25176803.2
(22) Date of filing: 15.05.2025
(51) Int. Cl.: G01N 35/00, G01N 35/02, G01N 35/10

(54) **SAMPLE PREPARATION MODULE, AUTOMATED LABORATORY DIAGNOSTIC SYSTEM AND METHOD**

(71) Applicant: Siemens Healthineers AG, 91301 Forchheim (DE)
(72) Inventor: Paulicka, Peter, 91301 Forchheim (DE); Seliger, Ramona, 91346 Wiesenttal (DE)
(74) Representative: Siemens Healthineers Patent Attorneys

(57) **Abstract**

The present invention relates to a sample preparation module (10) associated with an automated laboratory analyzer and configured to conduct a pre-analytical sample treatment comprising at least one treatment process on biomedical samples before the biomedical samples treated with the pre-analytical sample treatment access the automated laboratory analyzer. The sample preparation module comprises a robotic arm (11) having a control processor (12), wherein the control processor (12) is configured to enable the robotic arm (11) to move sample containers within a moving range (13) of the robotic arm; at least one first pipetting assembly (15) attached or coupled to the robotic arm (11); and a rotatable incubation ring (16) arranged within the moving range (13) of the robotic arm (11).

## Description

The present invention relates to a sample preparation module associated with an automated laboratory analyzer and configured to conduct a pre-analytical sample treatment comprising at least one treatment process on biomedical samples before the biomedical samples treated with the pre-analytical sample treatment access the automated laboratory analyzer. The present invention further relates to an automated laboratory diagnostic system and a method.

The clinical use of an automated laboratory diagnostic system is of essential importance in human medicine as well as in veterinary medicine. The automated laboratory diagnostic system in the clinical use refers to a set of hardware and software that are designed to automate the repetitive tasks and workflows in laboratory diagnostic testing. It can increase productivity, reduce human errors, optimize the use of resources and improve safety for laboratory personnel.

The automated laboratory diagnostic system integrates multiple laboratory functions in a single platform, such as immunoassay, clinical chemistry, hematology, urinalysis and/or alike. Therefore, the automated laboratory diagnostic system may commonly be employed for in vitro-diagnostics, IVD, and for essential medical decisions, which subjects the clinical use of the automated laboratory diagnostic system to highly strict regulatory approvals.

As a result, it is a challenge to change the hardware and/or software configurations related to the diagnostic assays parts of the automated laboratory diagnostic system without re-investigation of the performance of the automated laboratory diagnostic system, which would be time and cost intensive. In addition, the market of automated laboratory diagnostic systems faces fast changes with regard to the discovery of new biomarkers and/or new diagnostic targets. It is an obstacle to adapt the hardware and/or software configurations of existing automated laboratory diagnostic systems to new requirements coming from new biomarkers and/or new diagnostic targets. For example, the adoption of new biomarkers and/or new diagnostic targets on an automated laboratory diagnostic system may require additional sample preparation steps to enhance the sensitivity of the new biomarkers and/or new diagnostic targets prior to the automated diagnostic assays. Therefore, the pace of the entry of new biomarkers and/or new diagnostic targets into clinical routine is remarkably slow, as there are hardly any known cost-effective solutions for linking the preparation of the new biomarkers and/or new diagnostic targets to the existing automated laboratory diagnostic systems capable of delivering high-throughput analytical results. This delays the acquisition of clinical evidence and thus the acceptance of new biomarkers and/or new diagnostic targets.

Therefore, there is an unmet need to provide a cost-effective solution to automate the additional sample preparation steps for new biomarkers and/or new diagnostic targets before the new biomarkers and/or new diagnostic targets access the automated laboratory analyzer which executes the diagnostic assays for analysis. The solution should solely affect the non-diagnostic assays parts of the automated laboratory diagnostic system, which can link the preparation of the new biomarkers or a new diagnostic target to the existing automated laboratory analyzer capable of delivering high-throughput analytical results.

Previous solutions to perform additional sample preparation steps for new biomarkers and/or new diagnostic targets prior to the automated diagnostic assays are available mostly on research platforms or with the use of specialized manual kits. It may need a Point-of-Care (POC) solution solely tailored toward a specified new biomarker or a new diagnostic target without the link to the existing automated laboratory diagnostic system capable of delivering high-throughput analytical results. Alternatively, the adoption of new biomarkers and/or new diagnostic targets may be realized only until a new generation of automated laboratory diagnostic systems is available.

US 2015 064802 A1 discloses a modular approach to automation systems. The modules in US 2015 064802 A1 include portions of an automation system that can be linked to a larger automation system in a multi-module mode or used to provide local motion systems when operated in a stand-alone mode.

Against this background, the problem addressed by the present invention is to provide an improved solution for a sample preparation module associated with an automated laboratory analyzer. The sample preparation module can be arranged at an unused position of an automated laboratory analyzer. The sample preparation module can be a stand-alone module which may be placed at positions such as a track line loop, a decapper position or a sealer position of the automated laboratory analyzer or at other positions to which the sample preparation module fits appropriately. The sample preparation module is configured to conduct a pre-analytical sample treatment comprising at least one treatment process on biomedical samples before the biomedical samples treated with the pre-analytical sample treatment access the automated laboratory analyzer.

This problem is solved according to the invention by a sample preparation module having the features of claim 1 and/or by an automated laboratory diagnostic system having the features of claim 13 and/or by a method having the features of claim 15.

According to a first aspect, the present disclosure presents a sample preparation module associated with an automated laboratory analyzer and configured to conduct a pre-analytical sample treatment comprising at least one treatment process on biomedical samples before the biomedical samples treated with the pre-analytical sample treatment access the automated laboratory analyzer , the sample preparation module comprising: a robotic arm comprising a control processor, wherein the control processor is configured to enable the robotic arm to move at least one sample container within a moving range of the robotic arm, wherein the at least one sample container comprises at least one empty sample container or at least one sample container containing a biomedical sample; at least one first pipetting assembly attached or coupled to the robotic arm, wherein the at least one first pipetting assembly is configured to pipette the biomedical samples between different sample containers; and a rotatable incubation ring arranged within the moving range of the robotic arm and configured to receive the at least one sample container and provide an incubation function comprising mixing the biomedical samples and providing the biomedical samples for a reaction environment to enrich at least one analyte of interest from the biomedical samples and/or to conduct conditioning of the biomedical samples and/or to conduct re-elution of the biomedical samples. The biomedical samples can include biomedical particle samples and/or patient samples.

According to a second aspect, the present disclosure presents an automated laboratory diagnostic system enabling a pre-analytical sample treatment on biomedical samples before the biomedical samples treated with the pre-analytical sample treatment access an automated laboratory analyzer, the automated laboratory diagnostic system comprising: a sample preparation module according to the first aspect; and an automated laboratory analyzer comprising at least one position for the arrangement of the sample preparation module, wherein the automated laboratory analyzer is configured to analyze the biomedical samples treated with the pre-analytical sample treatment.

According to a third aspect, the present disclosure presents a method for enabling a pre-analytical sample treatment on biomedical samples before the biomedical samples treated with the pre-analytical sample treatment access an automated laboratory analyzer, the method comprising: providing a sample preparation module according to the first aspect; conducting the pre-analytical sample treatment on the biomedical samples by employing the provided sample preparation module; obtaining biomedical samples treated with the conducted pre-analytical sample treatment; and analyzing the obtained biomedical samples by employing the automated laboratory analyzer.

The present invention is based on the idea to provide a sample preparation module associated with an automated laboratory analyzer and configured to conduct a pre-analytical sample treatment comprising at least one treatment process on biomedical samples before the biomedical samples treated with the pre-analytical sample treatment access the automated laboratory analyzer.

The sample preparation module is subject to automate the pre-analytical sample treatment for new biomarkers and/or new diagnostic targets that require special sample treatment before they access the automated laboratory analyzer. The sample preparation module is stand-alone from the automated laboratory analyzer, which means that the arrangement of the sample preparation module will affect at most the track line interface and/or the non-assay parts of the automated laboratory analyzer. The automated laboratory analyzer is subjected to perform analysis functions, such as immunoassay, clinical chemistry, hematology, urinalysis and/or the like that indicate a diagnostic result of a biomedical sample. The sample preparation module is associated with the automated laboratory analyzer . The sample preparation module can be arranged at an unused position of an automated laboratory analyzer. The sample preparation module can be a stand-alone module which may be placed at positions such as a track line loop, a decapper position or a sealer position of the automated laboratory analyzer or at other positions to which the sample preparation module fits appropriately. A system comprising a sample preparation module associated with an automated laboratory analyzer can also be referred to as an automated laboratory diagnostic system.

The pre-analytical sample treatment conducted by the sample preparation module comprises at least one treatment process. The content of the pre-analytical sample treatment can be adapted in various modes which are specialized to different requirements coming from new biomarkers or new diagnostic targets but are sharing the same basic treatment processes of the pre-analytical sample treatment. The pre-analytical sample treatment may comprise sample conditioning that assures the biomedical samples at adequate pressure, flow, and/or temperature, enrichment of rare analytes of interest in the biomedical samples, and/or to re-elution of the biomedical samples or the like to ensure the validity of the automated diagnostic assays.

The sample preparation module comprises a) a robotic arm having a control processor, wherein the control processor is configured to enable the robotic arm to move at least one sample container within a moving range of the robotic arm, b) at least one first pipetting assembly attached or coupled to the robotic arm, and c) a rotatable incubation ring arranged within the moving range of the robotic arm.

The robotic arm may be a cartesian robot, a cylindrical robot, a spherical robot, or a revolute coordination robot or the like. The robotic arm may be a 3-axis, 4-axis, 5-axis or 6-axis robotic arm. The robotic arm may be capable of X (first-lateral) and Z (vertical); Y (second-lateral) and Z; X, Y, and Z; or r (radial) and theta (rotational) motion. The robotic arm may be a gantry robot, an articulated robot, an R-theta robot, or other suitable robot.

The movement of at least one sample container may comprise gripping the sample container at a predetermined position and releasing the sample container back to the predetermined position or another predetermined position. The sample container may be transferred from a sample track of the automated laboratory diagnostic system into the sample preparation module. The sample container may be a vial, a tube, a cuvette, a vessel or the like. The sample container may be empty or a sample container containing a biomedical sample. The bottom of the sample container may be brought in contact with miniaturized ultrasonic horn during container movement and processing. The biomedical samples may be patient samples containing a body fluid such as urine, blood serum, blood plasma, interstitial liquid, cerebrospinal liquid, exudate form abscesses or the like. The biomedical samples may be patient samples absorbed in a matrix (e.g. in a cotton fiber matrix). The biomedical samples may be dried blood spot patient samples. The biomedical samples may be patient samples absorbed in a matrix that are re-eluted in an assay-specific elution buffer. The assay-specific elution buffer may be added to the sample container with the dried blood spot. The biomedical samples may be biomedical particle samples containing functionalized biomolecules like antibodies, exosomes and/or functionalized micro- or nanobeads. The biomedical samples may contain a combination of a patient sample and a biomedical particle sample. The biomedical particle samples may be added into the patient samples during the pre-analytical sample treatment.

The at least one first pipetting assembly is configured to pipette the biomedical samples between different sample containers. The at least one first pipetting assembly can move along the movement of the robotic arm. Therefore, it is possible to pipette the biomedical samples through the movement of the robotic arm.

The rotatable incubation ring is configured to receive the at least one sample container and to provide an incubation function comprising mixing the biomedical samples and providing the biomedical samples for a reaction environment to enrich at least one analyte of interest from the biomedical samples and/or to conduct conditioning of the biomedical samples and/or to conduct re-elution of the biomedical samples. The incubation ring can mix the biomedical samples by the regular or irregular motion of itself. The incubation ring can also provide the necessary environment at adequate pressure, flow, and/or temperature for the enrichment of at least one analyte of interest from the biomedical samples and/or for the conditioning of the biomedical samples. The incubation ring may further comprise an ultrasound-based mixing unit underneath the incubation ring, which ultrasound-based mixing unit is configured to mix the biomedical samples by ultrasonic waves. The mixing of the biomedical samples may also be conducted by ultrasonic waves from the miniaturized ultrasonic horn that can be brought in contact or in close proximity to the bottom of a sample container.

The sample preparation module, which is associated with an automated laboratory analyzer, is an automated solution to conduct pre-analysis treatment of biomedical samples without manual preparation performed by the laboratory staff. This leads to reduced labor forces and excludes possible errors made by manual preparation. The sample preparation module will not affect the automated laboratory analyzer from a mechanical integration perspective, therefore, any hardware and/or software changes on the existing diagnostic assays parts of the automated laboratory analyzer are not necessary. This secures that there is no need for a re-evaluation of the diagnostic assays performance of the automated laboratory analyzer for regulatory purposes. The sample preparation module also enhances the pace of the adoption of new biomarkers and/or new diagnostic targets for high-throughput lab testing.

Advantageous configurations and developments emerge from the further dependent claims and from the description with reference to the figures of the drawings.

In a possible embodiment of the sample preparation module, the sample preparation module further comprises a gripper coupled to or mounted on the robotic arm. The gripper is configured to grip, carry and/or release the at least one sample container. The gripper may be a mechanical gripper. The mechanical gripper may be a parallel jaw gripper, a vacuum gripper, a finger gripper, an electromagnetic gripper, a pneumatic gripper or the like that provides variable robust grip for different types of sample containers. The gripper may be a mechanical/electronic hybrid gripper. The mechanical/electronic hybrid gripper may be a mechanical gripper equipped with different kinds of sensors, such as thermal sensor, proximity sensor, a radio frequency identification (RFID) sensor and/or like that can collect the necessary information of the samples or sample containers and transmit those information to the control processor. The gripper may be a soft gripper that uses flexible materials like silicone, rubber, polymers, and hydrogels that allow for elasticity, adaptability, and gentle interactions with the gripped objects. The soft gripper may be also equipped with different kinds of sensors. The gripper enables the robotic arm to physically interact with the sample containers and to finely tune the interaction between the robotic arm and the sample containers, which may increase the versatility of the robotic arm grip functions and/or provide force and feedback control of the robotic arm.

In another possible embodiment of the sample preparation module, the sample preparation module further comprises a parking ring coupled to or being part of the incubation ring and arranged within the moving range of the robotic arm, wherein the parking ring is configured to receive the at least one sample container without a requirement of movement during a predefined treatment process of the pre-analytical sample treatment. The parking ring may receive empty sample containers, which may be transferred to the sample preparation module together with sample containers that contain biomedical samples through the track line. The gripper of the robotic arm may grip the empty sample containers, carry them to the parking ring and release them to the parking ring. In this case, the biomedical sample in the sample container that is received in the incubation ring may be under incubation. The empty sample containers parking in the parking ring may receive the intermediate or final products of the incubation. The empty sample containers may be two sample containers of different capacities, wherein the smaller container can be stacked inside the larger one. The parking ring can also receive sample containers with biomedical samples, which do not require any movement during a predefined treatment process of the pre-analytical sample treatment. Therefore, it may enhance the efficiency of sample container transportation and thus the efficiency of the pre-analytical sample treatment.

In another possible embodiment of the sample preparation module, the sample preparation module further comprises an electrical heating unit coupled to or being part of the incubation ring. The electrical heating unit is configured to provide a necessary temperature to the incubation function. The electrical heating unit may be a number of electrical heating wires that wrap around internal and/or external parts of the incubation ring. The electrical heating unit may be an electrical heating bath that can maintain constant temperatures for the incubation ring with predefined heat transfer medium, such as heated water or oil. The electrical heating unit may be configured to generate and regulate necessary heat to the incubation ring within a predefined temperature range.

In another possible embodiment of the sample preparation module, the sample preparation module further comprises a particle enrichment unit coupled to or being part of the incubation ring, wherein the particle enrichment unit is configured to separate, purify and/or manipulate the biomedical particle samples. The biomedical particle samples refer to engineered biomaterials that vary substantially from nanometer scale to micrometer scale. They might be metallic or polymeric or lipid-based particles used as drug carriers. They might be particles used for carrying cells and/or antibodies. They might be exosomes or extracellular vesicles naturally secreted by cells used for providing diagnostic targets or biomarkers. They might be magnetic particles used for drug carriers or magnetic sorting. Magnetic force or field should be applied to magnetic particles at certain positions before and during washing of the biomedical samples. Appropriate magnetic force or field may be generated by neodymium magnets and/or electromagnetic field. Any other particles are possible. The particle enrichment unit can separate, purify and/or manipulate the biomedical particle samples onsite during the pre-analytical sample treatment, which enables a more compact workflow for the pre-analytical sample treatment and thus enhance the efficiency of the pre-analytical sample treatment.

In another possible embodiment of the sample preparation module, the at least one first pipetting assembly is configured to pipette volumes substantially from 10 to 1500 µL. "Pipetting" means to transfer or measure out a liquid sample using a pipette. For example, the at least one first pipetting assembly can pipette substantially 1 mL patient sample into an empty sample container received by the incubation ring, or the at least first pipetting assembly can pipette substantially 200 µL of an assay-specific elution buffer into the sample container that contains a dried blood spot sample. There might be enough volume for the biomedical samples to enrich the at least one analyte of interest or separate the patient liquid samples from a matrix material. The at least one first pipetting assembly might be a mechanical pipette assembly or a mechanical and electronic hybrid pipette assembly that can be controlled by the control processor of the robotic arm. The at least one first pipetting assembly might maintain the manual operation option prepared for a necessary situation. The first pipetting assembly might be a single-channel pipetting assembly that can solely pipette a patient sample in one sample container at a time. The first pipetting assembly might be a multi-channel pipetting assembly that can pipette multiple patient samples in multiple sample containers at a time. The at least one first pipetting assembly has a relatively large pipetting range to meet different pipetting demands from large to small volumes. Therefore, the at least one first pipetting assembly can enhance the flexibility of the pre-analytical sample treatment to adapt to different treatment processes.

In another possible embodiment of the sample preparation module, the sample preparation module further comprises a second pipetting assembly coupled to the incubation ring. The second pipetting assembly is configured to pipette volumes substantially from 1 to 100 µL. The second pipetting assembly might be placed near to the incubation ring and can pipette substantially 100 µL biomedical particle sample. The substantially 100 µL biomedical particle sample might be added into the 1 mL patient sample or patient liquid samples separated from the matrix material. Provided with a suitable reaction environment, the patient sample will have a reaction with the biomedical particle sample to enrich the at least one analyte of interest. The second pipetting assembly might be a mechanical pipette assembly or a mechanical and electronic hybrid pipette assembly that can be controlled by the control processor of the robotic arm. The second pipetting assembly might maintain the manual operation option prepared for a necessary situation. The second pipetting assembly might be a single-channel pipetting assembly that can solely pipette the biomedical particle sample in one sample container at a time. The second pipetting assembly might be a multi-channel pipetting assembly that can pipette the biomedical particle samples in multiple sample containers at a time. The second pipetting assembly has a relatively small pipetting range, which can address the particular smaller volume pipetting demands for the treatment process.

In another possible embodiment of the sample preparation module, the sample preparation module further comprises a wash station associated with the incubation ring and the robotic arm and configured to remove a liquid waste suspended on the biomedical samples and/or dispense a wash buffer into a sample container. After the reaction of a patient sample and a biomedical particle sample, at least one analyte of interest may settle to the bottom of the sample container after reaction, and there may be supernatant or liquid waste in the upper part of the sample container after reaction. The wash station can remove the supernatant or liquid waste that is unnecessary for the following diagnostic assays and dispense the wash buffer into the sample container after reaction to re-suspend the sample after reaction. The at least one first pipetting assembly might be configured to remove a liquid waste and/or dispense the wash buffer into the sample after reaction, as the wash buffer may has 200 µL volume. Different tips for different liquids are employed in the at least one first pipetting assembly. There might be a third pipetting assembly associated with the wash station configured to remove the supernatant or liquid waste and dispense the wash buffer into the sample container after reaction. The wash station can remove the liquid waste and dispense a wash buffer onsite during the pre-analytical sample treatment, which enables a more compact workflow for the pre-analytical sample treatment and thus enhances the efficiency of the pre-analytical sample treatment.

In another possible embodiment of the sample preparation module, the sample preparation module further comprises an insertion drawer arranged in the robotic arm and configured to store laboratory consumables and/or reagents. The laboratory consumables may comprise sample containers, pipetting tips, reagents cartridges and/or other consumables that are necessary for interacting with the biomedical samples during an ongoing pre-analytical sample treatment. The reagents may be immunomagnetic particles or special diluents or the like. The insertion drawer may have a fridge functionality for storing the reagents. The laboratory consumables and/or reagents stored in the insertion drawer are managed by the control processor of the robotic arm. The control processor will predict the need of laboratory consumables and/or reagents for a predefined pre-analytical sample treatment. During the pre-analytical sample treatment, the robotic arm may obtain the laboratory consumables and/or reagents from the insertion drawer. Therefore, it can reduce waste of the laboratory consumables and/or reagents.

In another possible embodiment of the sample preparation module, the sample preparation module further comprises a back-up storage compartment associated with the robotic arm and within the moving range of the robotic arm. The storage compartment is configured to store back-up laboratory consumables for a plurality of pending pre-analytical sample treatment. Under the demand of high-throughput diagnostic testing, the subsequent pre-analytical sample treatment is supposed to follow a tight schedule. The laboratory consumables consumed in the last pre-analytical sample treatment can be easily replenished from the back-up storage compartment. Therefore, the pending time between two subsequent pre-analytical sample treatments can be reduced.

In another possible embodiment of the sample preparation module, the sample preparation module further comprises an industrial camera inspection and control unit coupled to the robotic arm and configured to guide the robotic arm. The industrial camera inspection and control unit may comprise at least one 2D or 3D camera. The industrial camera may be coupled to the robotic arm wired or wirelessly. The laboratory staff can guide the robotic arm via images or videos inspection provided from the industrial camera inspection and control unit.

In another possible embodiment of the sample preparation module, the sample preparation module further comprises a spectrophotometric measurement compartment associated with the robotic arm or the incubation ring. The spectrophotometric measurement compartment is configured to measure predefined biomarkers of interest inside the biomedical samples in real-time. A spectrophotometric measurement is a quantitative method used to determine how much light a substance absorbs or transmits at different wavelengths. For example, the spectrophotometric measurement can be used to measure the concentrations of hemoglobin, billirubin and/or lipids in the relevant biomedical samples. The spectrophotometric measurement compartment is configured to detect a liquid level in the sample containers during the movement of the robotic arm to ensure correct pipetting position of the biomedical samples. The spectrophotometric measurement compartment is further configured to detect different liquid phases in the biomedical samples, for example, blood cells on the bottom versus plasma in the relevant biomedical samples. This facilitates obtaining an initial overview of the biomedical samples.

In a possible embodiment of the automated laboratory diagnostic system, the sample preparation module interacts with the automated laboratory analyzer with only a change of a track line interface of the automated laboratory analyzer and/or other non-assay relevant hardware and/or software implementations of the automated laboratory analyzer. The sample preparation module associated with the automated laboratory analyzer can also be referred to an automated laboratory diagnostic system. The sample preparation module is stand-alone from the automated laboratory analyzer, which means that the arrangement of the sample preparation module will affect at most the track line interface and/or the non-assay parts of the automated laboratory analyzer. The automated laboratory analyzer is designed to perform analysis functions, such as immunoassay, clinical chemistry, hematology, urinalysis and/or the like that indicate a diagnostic result of a biomedical sample. The sample preparation module can be arranged at an unused position of an automated laboratory analyzer. The sample preparation module can be a stand-alone module which may be placed at positions such as a track line loop, a decapper position or a sealer position of the automated laboratory analyzer or at other positions into which the sample preparation module fits appropriately. The sample preparation module will not affect the automated laboratory analyzer from a mechanical integration perspective, therefore, any hardware and/or software changes on the existing diagnostic assays parts of the automated laboratory analyzer are not necessary. This secures that there is no need for a re-evaluation of the diagnostic assays performance of the automated laboratory analyzer for regulatory purposes.

Where appropriate, the above-mentioned configurations and developments can be combined and implementations can be combined with each other as desired, as far as this is reasonable. Further possible configurations, developments and implementations of the invention also include combinations, which are not explicitly mentioned, of features of the invention which have been described previously or are described in the following with reference to the embodiments. In particular, in this case, a person skilled in the art will also add individual aspects as improvements or supplements to the basic form of the present invention.

The present invention is described in greater detail in the following on the basis of the embodiments shown in the schematic figures of the drawings, in which:
- FIG. 1: illustrates a block diagram of an example of a sample preparation module;
- FIG. 2: illustrates a block diagram of another example of the sample preparation module;
- FIG. 3: illustrates a block diagram of an example of an automated laboratory diagnostic system;
- FIG. 4: illustrates a chart of an example of pre-analytical sample treatment; and
- FIG. 5: illustrates a chart of another example of pre-analytical sample treatment; and
- FIG. 6: illustrates a chart of an example of a method for enabling a pre-analytical sample treatment of biomedical samples before the biomedical samples treated with the pre-analytical sample treatment access an automated laboratory analyzer.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

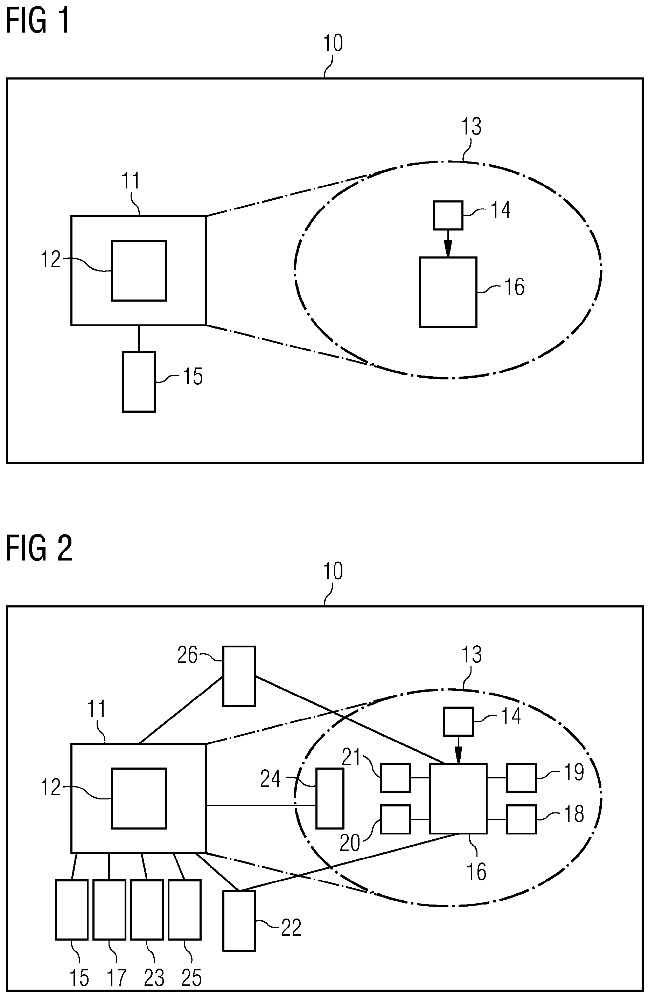

FIG. 1 illustrates a block diagram of an example of a sample preparation module.

The sample preparation module in FIG. 1 is denoted by reference numeral 10. The sample preparation module 10 comprises a robotic arm 11, at least one first pipetting assembly 15 and a rotatable incubation ring 16. The robotic arm 11 comprises a control processor 12. The control processor 12 is configured to enable the robotic arm 11 to move at least one sample container 14 within a moving range 13 of the robotic arm 11. The at least one sample container 14 comprises at least one empty sample container or at least one sample container containing a biomedical sample, such as a biomedical particle sample and/or a patient sample. The at least one first pipetting assembly 15 is attached or coupled to the robotic arm 11. The rotatable incubation ring 16 is arranged within the moving range 13 of the robotic arm 11.

The sample preparation module 10 automates the pre-analytical sample treatment for new biomarkers and/or the new diagnostic targets that require special sample pre-treatment before they access the I automated laboratory analyzer (not shown in FIG. 1). The sample preparation module 10 is stand-alone from the automated laboratory analyzer, which means that the arrangement of the sample preparation module 10 will affect at most the track line interface and/or the non-assay parts of the automated laboratory analyzer. The automated laboratory analyzer performs analysis functions, such as immunoassay, clinical chemistry, hematology, urinalysis and/or the like that indicate a diagnostic result of a biomedical sample.

The robotic arm 11 may be a cartesian robot, a cylindrical robot, a spherical robot, or a revolute coordination robot or the like. The robotic arm 11 may be a 3-axis, 4-axis, 5-axis or 6-axis robotic arm. The robotic arm 11 may be capable of X (first-lateral) and Z (vertical); Y (second-lateral) and Z; X, Y, and Z; or r (radial) and theta (rotational) motion. The robotic arm 11 may be a gantry robot, an articulated robot, an R-theta robot, or other suitable robot, wherein the robotic arm may allow the sample preparation module to fit in the automated laboratory analyzer appropriately.

The movement of the sample container 14 may comprise gripping the sample container from a predetermined position and release the sample container back to the predetermined position or another predetermined position. The sample container 14 may be transferred form a sample track of the automated laboratory diagnostic system into the sample preparation module. The sample container may be a vial, a tube, a cuvette, a vessel or the like. The sample container may be an empty sample container or a sample container containing a biomedical sample. The sample container 14 may comprise a miniaturized ultrasonic horn that can be brought in contact with the bottom of the sample container. The biomedical samples may be patient samples containing a body fluid such as urine, blood serum, blood plasma, interstitial liquid, cerebrospinal liquid, exudate form abscesses or the like. The biomedical samples may be patient samples absorbed in a matrix (e.g. in a cotton fiber matrix). The biomedical samples may be dried blood spot patient samples. The biomedical sample may be patient samples absorbed in a matrix that are re-eluted in an assay-specific elution buffer. The assay-specific elution buffer may be added to the sample container with the dried blood spot. The biomedical samples may be particle samples containing functionalized biomolecules like antibodies, exosomes and/or functionalized micro- or nanobeads. The biomedical samples may contain a combination of a patient sample and a particle sample.

The at least one first pipetting assembly 15 is configured to pipette the biomedical samples between different sample containers. The at least one first pipetting assembly 15 can move along the movement of the robotic arm 11. Therefore, it is possible to pipette the biomedical samples through the movement of the robotic arm 11. The at least one first pipetting assembly 15 is configured to pipette volumes substantially from 10 to 1500 µL. For example, the at least one first pipetting assembly 15 can pipette substantially 1 mL patient sample in an empty sample container received by the incubation ring 16, or the at least one first pipetting assembly can pipette substantially 200 µL of an assay-specific elution buffer into a sample container that contains a dried blood spot. There might be enough volume for the biomedical samples to enrich the at least one analyte of interest or separate the patient liquid samples from the matrix material. The at least one first pipetting assembly 15 might be a mechanical pipette assembly or mechanical and electronic hybrid pipette assembly that can be controlled by the control processor 12 of the robotic arm 11. The at least one first pipetting assembly 15 might maintain the manual operation option prepared for a necessary situation. The first pipetting assembly 15 might be a single-channel pipetting assembly that can solely pipette the patient sample in one sample container at a time. The first pipetting assembly might be a multi-channel pipetting assembly that can pipette multiple patient samples into multiple sample containers at a time. The at least one first pipetting assembly 15 has a relatively large pipetting range to meet different pipetting demands from large to small volumes. Therefore, the at least one first pipetting assembly 15 can enhance the flexibility of the pre-analytical sample treatment to adapt to different treatment processes.

The rotatable incubation ring 16 is configured to receive at least one sample container 14 and provide an incubation function comprising mixing the biomedical samples and providing the biomedical samples for a reaction environment to enrich at least one analyte of interest from the biomedical samples and/or to conduct conditioning of the biomedical samples and/or to conduct re-elution of the biomedical samples. The incubation ring 16 can mix the biomedical samples by the regular or irregular motion of itself. The incubation ring 16 can also provide necessary environment at adequate pressure, flow, and/or temperature for the enrichment of at least one analyte of interest from the biomedical samples and/or the conditioning of the biomedical samples and/or to re-elution of the biomedical samples. The incubation ring 16 may further comprise an ultrasound-based mixing unit underneath the incubation ring 16, which ultrasound-based mixing unit is configured to mix the biomedical samples by ultrasonic waves. The mixing of the biomedical samples may also be conducted by ultrasonic waves from the miniaturized ultrasonic horn that can be brought in contact with the bottom of the sample container 14.

The sample preparation module 10, which is associated with an automated laboratory analyzer, is an automated solution to conduct pre-analysis treatment of biomedical samples without manual preparation performed by the laboratory staff. This leads to reduced labor forces and excludes possible errors made by manual preparation. The sample preparation module 10 will not affect the automated laboratory analyzer from a mechanical integration perspective, therefore, any hardware and/or software changes on the existing diagnostic assays parts of the automated laboratory analyzer are not necessary. This secures that there is no need for a re-evaluation of the diagnostic assays performance of the automated laboratory analyzer for regulatory purposes. The sample preparation module 10 also enhances the pace of the adoption of new biomarkers and/or new diagnostic targets for high-throughput lab testing.

FIG. 2 illustrates a block diagram of another example of the sample preparation module.

According to FIG. 2, the sample preparation module 10 comprises further a gripper 17, a parking ring 18, an electrical heating unit 19, a bio-particle enrichment unit 20, a second pipetting assembly 21, a wash station 22, an insertion drawer 23, a back-up storage compartment 24, an industrial camera inspection and control unit 25, and a spectrophotometric measurement compartment 26.

The gripper 17 is coupled to or mounted on the robotic arm 11. The gripper 17 is configured to grip, carry and/or release sample container 14. The gripper 17 may be a mechanical gripper. The mechanical gripper may be a parallel jaw gripper, a vacuum gripper, a finger gripper, an electromagnetic gripper, a pneumatic grippers or the like that provides variable robust grip for different types of sample containers. The gripper 17 may be a mechanical/electronic hybrid gripper. The mechanical/electronic hybrid gripper may be a mechanical gripper equipped with different kinds of sensors, such as thermal sensor, proximity sensor, an RFID sensor and/or like that can collect the necessary information of the samples or sample containers and transmit this information to the control processor 12 that waited to be further processed. The gripper 17 may be a soft gripper that uses flexible materials like silicone, rubber, polymers, and hydrogels that allow for elasticity, adaptability, and gentle interactions with the gripped objects. The soft gripper may be also equipped with different kinds of sensors. The gripper 17 enables the robotic arm 11 to physically interact with the sample containers and to finely tune the interaction between the robotic arm 11 and the sample containers, which may increase the versatility of the robotic arm gripped functions and/or provide force and feedback control of the robotic arm.

The parking ring 18 is coupled to or being part of the incubation ring 16 and arranged within the moving range 13 of the robotic arm 11. The parking ring 18 is configured to receive the sample container 14 without a requirement of movement during a predefined treatment process of the pre-analytical sample treatment. The parking ring 18 may receive empty sample containers, which may be transferred to the sample preparation module together with sample containers that contain biomedical samples through the track line. The gripper 17 of the robotic arm 11 may grip the empty sample containers, carry them to the parking ring 18 and release them to the parking ring 18. In this case, the biomedical sample in the sample container received in the incubation ring 16 may be under incubation. The empty sample containers parking in the parking ring 18 may receive the intermediate or final products of the incubation. The empty sample containers may be sample containers of different capacities, wherein the smaller container can be stacked inside the larger one. The parking ring 18 can also receive sample containers with biomedical samples, which are without a requirement of movement during a predefined treatment process of the pre-analytical sample treatment. Therefore, it may enhance the efficiency of sample container transportation and thus the efficiency of the pre-analytical sample treatment.

The electrical heating unit 19 is coupled to or being part of the incubation ring 16. The electrical heating unit 19 is configured to provide necessary temperature to the incubation function. The electrical heating unit 19 may comprise a number of electrical heating wires that wrap around internal or external or internal and external parts of the incubation ring 16. The electrical heating unit 19 may be an electrical heating bath that can maintain constant temperatures for the incubation ring 16 with predefined heat transfer medium, such as heated water or oil. The electrical heating unit 19 may be configured to generate and regulate necessary heat to the incubation ring 16 within a predefined temperature range.

The particle enrichment unit 20 is coupled to or being part of the incubation ring 16. The particle enrichment unit 20 is configured to separate, purify and/or manipulate the biomedical particle samples. The biomedical particle samples refer to engineered biomaterials that vary substantially from nanometer scale to micrometer scale. They might be metallic or polymeric or lipid-based particles used as drug carrier. They might be particles used for carrying cells and/or antibodies. They might be exosomes or extracellular vesicles naturally secreted by cells used for providing diagnostic targets or biomarkers. They might be magnetic particles used as drug carriers or for magnetic sorting. Magnetic force or field should be applied to magnetic particles at certain positions before and during washing of the biomedical samples. Appropriate magnetic force or field may be generated by neodymium magnets and/or electromagnetic field. Any other biomedical particles are possible. The particle enrichment unit 20 can separate, purify and/or manipulate the biomedical particle samples onsite during the pre-analytical sample treatment, which enable a more compact workflow for the pre-analytical sample treatment and thus enhance the efficiency of the pre-analytical sample treatment.

The second pipetting assembly 21 is coupled to the incubation ring 16. The second pipetting assembly 21 is configured to pipette volumes substantially from 1 to 100 µL. The second pipetting assembly 21 might be placed near to the incubation ring 16 and can pipette substantially 100 µL biomedical particle sample. The substantially 100 µL biomedical particle sample might be added into the 1 mL patient sample. Provided with a suitable reaction environment, the patient sample will have a reaction with the biomedical particle sample to enrich the at least one analyte of interest. The second pipetting assembly 21 might be a mechanical pipette assembly or a mechanical and electronic hybrid pipette assembly that can be controlled by the control processor 12 of the robotic arm 11. The second pipetting assembly 21 might maintain the manual operation option prepared for a necessary situation. The second pipetting assembly 21 might be a single-channel pipetting assembly that can solely pipette the biomedical particle sample in one sample container at a time. The second pipetting assembly 21 might be a multi-channel pipetting assembly that can pipette multiple biomedical particle samples in multiple sample containers at a time. The second pipetting assembly 21 has a relatively small pipetting range, which can address the particular smaller volume pipetting demands for the treatment process.

The wash station 22 is associated with the incubation ring 16 and the robotic arm 11 and is configured to remove a liquid waste suspended on the biomedical samples and/or dispense a wash buffer into sample containers 14. After the reaction of a patient sample and a biomedical particle sample, the at least one analyte of interest may settle to the bottom of the sample container after reaction and there may be supernatant or liquid waste in the upper part of the sample container after reaction. The wash station 22 can remove the supernatant or liquid waste that is unnecessary for the further diagnostic assays and dispense the wash buffer into the sample container after reaction to re-suspend the sample after reaction. The at least one first pipetting assembly 15 might be configured to remove liquid waste and/or dispense wash buffer into the sample container after reaction, as the wash buffer may has 200 µL volume. Different tips for different liquids are employed in the at least one first pipetting assembly 15. There might be a third pipetting assembly associated with the wash station 22 and configured to remove the supernatant or liquid waste and dispense the wash buffer into the sample container after reaction.

The wash station 22 can remove the liquid waste and dispense a wash buffer onsite during the pre-analytical sample treatment, which enables a more compact workflow for the pre-analytical sample treatment and thus enhances the efficiency of the pre-analytical sample treatment.

The insertion drawer 23 is arranged in the robotic arm 11 and configured to store laboratory consumables and/or reagents. The laboratory consumables may comprise sample containers, pipetting tips, reagents cartridges and/or other consumables that are necessary for interacting with the biomedical samples during an ongoing pre-analytical sample treatment. The reagents may be immunomagnetic particles or special diluents or the like. The insertion drawer 23 may have a fridge functionality for storing the reagents. The laboratory consumables and/or reagents stored in the insertion drawer 23 are managed by the control processor 12 of the robotic arm 11. The control processor 12 will predict the need of laboratory consumables and/or reagents for a predefined pre-analytical sample treatment. During the pre-analytical sample treatment, the robotic arm 11 may obtain the laboratory consumables and/or reagents from the insertion drawer 23. Therefore, it can reduce waste of the laboratory consumables and/or reagents.

The back-up storage compartment 24 is associated with the robotic arm 11 and within the moving range 13 of the robotic arm 11. The back-up storage compartment 24 is configured to store back-up laboratory consumables for a plurality of pending pre-analytical sample treatments. Under the demand of high-throughput diagnostic testing, subsequent pre-analytical sample treatments are supposed to follow a tight schedule. The laboratory consumables consumed in the last pre-analytical sample treatment can be easily replenished from the back-up storage compartment 24. Therefore, the pending time between two subsequent pre-analytical sample treatments can be reduced.

The industrial camera inspection and control unit 25 is coupled to the robotic arm 11 and configured to guide the robotic arm 11. The industrial camera inspection and control unit 25 may comprise at least one 2D or 3D camera. The industrial camera may be coupled to the robotic arm 11 wired or wirelessly. The laboratory staff can guide the robotic arm 11 via images or videos inspection provided from the industrial camera inspection and control unit 25.

The spectrophotometric measurement compartment 26 is associated with the robotic arm 11 or the incubation ring 16. The spectrophotometric measurement compartment 26 is configured to measure predefined biomarkers of interest inside the biomedical samples in real-time. A spectrophotometric measurement is a quantitative method used to determine how much light a substance absorbs or transmits at different wavelengths. For example, the spectrophotometric measurement can be used to measure the concentrations of hemoglobin, billirubin and/or lipids in the relevant biomedical samples. The spectrophotometric measurement compartment 26 is configured to detect a liquid level in the sample containers during the movement of the robotic arm 11 to ensure correct pipetting position of the biomedical samples. The spectrophotometric measurement compartment 26 is further configured to detect different liquid phases in the biomedical samples, for example, blood cells on the bottom versus plasma in the relevant biomedical samples. This facilitates obtaining an initial overview of the biomedical samples.

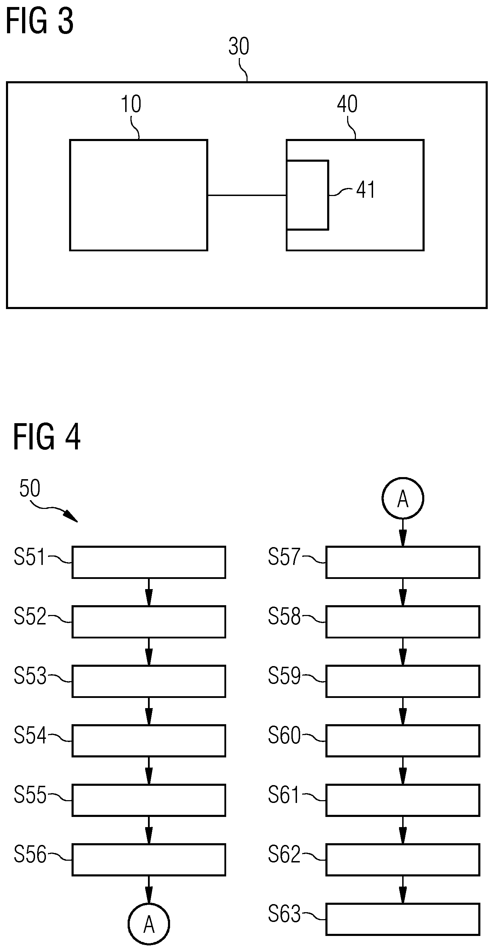

FIG. 3 illustrates a block diagram of an example of an automated laboratory diagnostic system.

The automated laboratory diagnostic system in FIG. 3 is denoted by reference numeral 30. The automated laboratory diagnostic system 30 comprises a sample preparation module 10, and an automated laboratory analyzer 40. The automated laboratory analyzer 40 comprises at least one position 41 for the arrangement of the sample preparation module 10. The automated laboratory analyzer 40 is configured to analyze the biomedical samples treated with the pre-analytical sample treatment.

The system with which the sample preparation module 10 is associated at position 41 of the automated laboratory analyzer can also refer to an automated laboratory diagnostic system 30. The position 41 of the automated laboratory analyzer may be a track line loop, a sealer position, a decapper position or the like of the automated laboratory diagnostic system 30.

The automated laboratory diagnostic system 30 provides an automated solution to conduct biomedical samples pre-analysis treatment without manual preparation performed by the laboratory staff. This leads to reduced labor forces and excludes possible errors made by manual preparation. The sample preparation module 10 will not affect the automated laboratory analyzer 40 from a mechanical integration perspective, therefore, any hardware and/or software changes on the existing diagnostic assays parts of the automated laboratory analyzer 40 are not necessary. This secures that there is no need for a re-evaluation of the diagnostic assays performance of the automated laboratory analyzer 40 for regulatory purposes. The automated laboratory diagnostic system 30 also enhances the pace of the adoption of new biomarkers and/or new diagnostic targets for high-throughput lab testing.

FIG. 4 illustrates a chart of an example of the pre-analytical sample treatment.

FIG. 4 shows an example of pre-analytical sample treatment 50 conducted by the sample preparation module 10, taking the exosome-based immunoassay as an example. In this assay, the patient samples need to be reacted with functionalized exosome beads to enrich the analyte of interest to facilitate the subsequent diagnostic assay. In this example, the pre-analytical sample treatment conducted by the sample preparation module 10 comprises the steps S51 - S63. Step S51: two empty sample containers of different capacities are transferred to the sample preparation module 10 through the track line of the automated laboratory diagnostic system 30; the smaller container is stacked inside the larger one. Step S52: the gripper 17 of the robotic arm 11 grips the larger container and transfers it to the incubation ring 16. Step S53: the gripper 17 of the robotic arm 11 grips the smaller container and transfers it to the parking ring 18. Step S54: the sample container containing the patient sample is transferred to the sample preparation module 10 through the track line of the automated laboratory diagnostic system 30. Step S55: the first pipetting assembly transfers 1 mL patient sample into the larger sample container in the incubation ring 16. Step S56: the sample container containing the exosome beads is transferred to the sample preparation module 10 through the track line of the automated laboratory diagnostic system 30. Step S57: the second pipetting assembly adds 50 µL exosome beads to the 1 mL patient sample. Step S58: the incubation ring 16 starts the incubation function for the mixed samples. Step S59: after incubation, the sample is transferred to the wash station 22 to remove the liquid waste suspended on sample after incubation; a wash buffer is dispensed to re-suspend the sample after incubation. Step S60: after incubation, the sample is pipetted to the smaller container in the parking ring 18. Step S61: the gripper 17 of the robotic arm 11 transfers the smaller container to the larger container in the incubation ring 16, such that the smaller container is stacked inside the larger one again. Step S62: the gripper 17 of the robotic arm 11 transfers the two sample containers back to the track line of the automated laboratory diagnostic system 30. Step S63: after incubation, the sample is transferred by the track line to the automated laboratory analyzer 40 for subsequent diagnostic assaying.

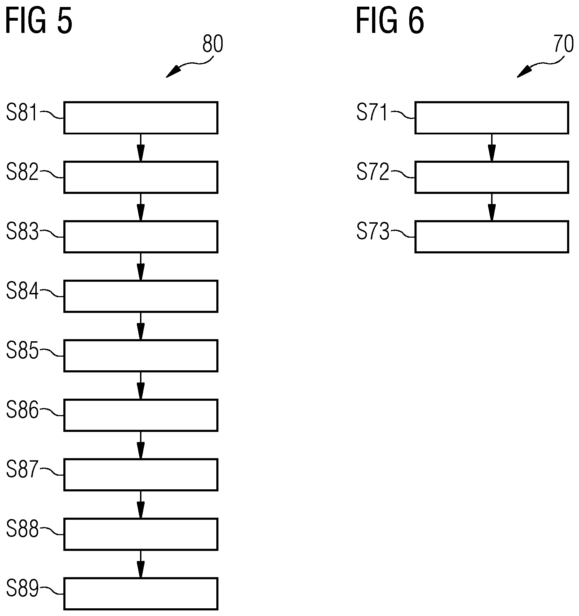

FIG. 5 illustrates a chart of another example of the pre-analytical sample treatment.

FIG. 5 shows another example of a pre-analytical sample treatment 80 conducted by the sample preparation module 10, taking a matrix bound sample pre-treatment as an example, wherein the patient liquid samples need to be separated from a matrix material. In this example, the pre-analytical sample treatment conducted by the sample preparation module 10 comprises the steps S81 - S89. Step S81: two sample containers of different capacities are transferred to the sample preparation module 10 through the track line of the automated laboratory diagnostic system 30; the larger sample container contains at least one dried blood spot sample and the smaller container is stacked inside the larger one. Step S82: the gripper 17 of the robotic arm 11 transfers the larger container to the incubation ring 16. Step S83: the gripper 17 of the robotic arm 11 transfers the smaller container to the parking ring 18. Step S84: the first pipetting assembly transfers 200 µL of an assay-specific elution buffer to the sample container with the dried blood spot. Step S85: the incubation ring 16 starts the incubation function and mixes the biomedical samples by ultrasonic waves. Step S86: after incubation, the biomedical samples may contain patient liquid samples separated from the matrix material; the patient liquid sample is pipetted to the smaller container in the parking ring 18. Step S87: the gripper 17 of the robotic arm 11 transfers the smaller container to the larger container in the incubation ring 16, such that the smaller container is stacked inside the larger one again. Step S88: the gripper 17 of the robotic arm 11 transports the two sample containers back to the track line of the automated laboratory diagnostic system 30. Step S89: after incubation, the sample is transferred by the track line to the automated laboratory analyzer 40 for subsequent diagnostic assaying.

FIG. 6 illustrates a chart of an example of a method for enabling a pre-analytical sample treatment on biomedical samples before the biomedical samples treated with the pre-analytical sample treatment access an automated laboratory analyzer. The method 70 comprises: Step S71, conducting the pre-analytical sample treatment on the biomedical samples with the sample preparation module 10; Step S72, obtaining biomedical samples treated with the pre-analytical sample treatment; Step S73, analyzing the biomedical samples treated with the pre-analytical sample treatment with the automated laboratory analyzer 40.

Although the present invention has been described in the above by way of embodiments, it is not limited thereto, but rather can be modified in a wide range of ways. In particular, the invention can be changed or modified in various ways without deviating from the core of the invention.

Independent of the grammatical term usage, individuals with male, female or other gender identities are included within the term.

### List of References

- 10: sample preparation module
- 11: robotic arm
- 12: control processor
- 13: moving range of robotic arm
- 14: at least one sample container
- 15: at least one first pipetting assembly
- 16: rotatable incubation ring
- 17: gripper
- 18: parking ring
- 19: electrical heating unit
- 20: particle enrichment unit
- 21: second pipetting assembly
- 22: wash station
- 23: insertion drawer
- 24: back-up storage compartment
- 25: industrial camera inspection and control unit
- 26: spectrophotometric measurement compartment
- 30: automated laboratory diagnostic system
- 40: automated laboratory analyzer
- 41: positions of automated laboratory analyzer
- 50: first example of the pre-analytical sample treatment
- 70: method for enabling a pre-analytical sample treatment
- 80: second example of the pre-analytical sample treatment

- S51 - S63: first example of the treatment process of the pre-analytical sample treatment
- S71: conducting the pre-analytical sample treatment
- S72: obtaining biomedical samples treated with the pre-analytical sample treatment
- S73: analyzing biomedical samples treated with the pre-analytical sample treatment with the automated laboratory analyzer
- S81 - S89: second example of the treatment process of the pre-analytical sample treatment

## Claims

1. A sample preparation module (10) configured to be associated with an automated laboratory analyzer (40) and configured to conduct a pre-analytical sample treatment comprising at least one treatment process on biomedical samples before the biomedical samples treated with the pre-analytical sample treatment access the automated laboratory analyzer (40), the sample preparation module (10) comprising:
a robotic arm (11) having a control processor (12), wherein the control processor (12) is configured to enable the robotic arm (11) to move at least one sample container (14) within a moving range (13) of the robotic arm (11), wherein the at least one sample container (14) comprises at least one empty sample container or at least one sample container (14) containing a biomedical sample;
at least one first pipetting assembly (15) attached or coupled to the robotic arm (11), wherein the at least one first pipetting assembly (15) is configured to pipette the biomedical samples between different sample containers; and
a rotatable incubation ring (16) arranged within the moving range (13) of the robotic arm (11) and configured to receive the at least one sample container (14) and provide an incubation function comprising mixing the biomedical samples and providing the biomedical samples for a reaction environment to enrich at least one analyte of interest from the biomedical samples and/or to conduct conditioning of the biomedical samples and/or to conduct re-elution of the biomedical samples.

2. The sample preparation module (10) according to claim 1, further comprising a gripper (17) coupled to or mounted on the robotic arm (11), wherein the gripper (17) is configured to grip, carry and/or release the at least one sample container (14).

3. The sample preparation module (10) according to any of the preceding claims, further comprising a parking ring (18) coupled to or being part of the incubation ring (16) and arranged within the moving range (13) of the robotic arm (11), wherein the parking ring (18) is configured to receive the at least one sample container (14) without a requirement of movement during a predefined treatment process of the pre-analytical sample treatment.

4. The sample preparation module (10) according to any of the preceding claims, further comprising an electrical heating unit (19) coupled to or being part of the incubation ring (16), wherein the electrical heating unit (19) is configured to provide a necessary temperature to the incubation function.

5. The sample preparation module (10) according to any of the preceding claims, further comprising a particle enrichment unit (20) coupled to or being part of the incubation ring (16), wherein the particle enrichment unit (20) is configured to separate, purify and/or manipulate biomedical particle samples.

6. The sample preparation module (10) according to any of the preceding claims, wherein the at least one first pipetting assembly (15) is configured to pipette volumes substantially from 10 to 1500 µL.

7. The sample preparation module (10) according to any of the preceding claims, further comprising a second pipetting assembly (21) coupled to the incubation ring, wherein the second pipetting assembly (21) is configured to pipette volumes substantially from 1 to 100 µL.

8. The sample preparation module (10) according to any of the preceding claims, further comprising
a wash station (22) associated with the incubation ring (16) and the robotic arm (11) and configured to remove a liquid waste suspended on the biomedical samples and/or dispense a wash buffer into the at least one sample container (14).

9. The sample preparation module (10) according to any of the preceding claims, further comprising an insertion drawer (23) arranged in the robotic arm (11) and configured to store laboratory consumables comprising sample containers, pipetting tips and/or other consumables that are necessary for interacting with the biomedical samples during an ongoing pre-analytical sample treatment, wherein the laboratory consumables stored in the insertion drawer (23) are managed by the control processor (12) of the robotic arm (11).

10. The sample preparation module (10) according to any of the preceding claims, further comprising a back-up storage compartment (24) associated with the robotic arm (11) and within the moving range (13) of the robotic arm, wherein the back-up storage compartment (24) is configured to store back-up laboratory consumables for a plurality of pending pre-analytical sample treatments.

11. The sample preparation module (10) according to any of the preceding claims, further comprising an industrial camera inspection and control unit (25) coupled to the robotic arm (11) and configured to guide the robotic arm (11).

12. The sample preparation module (10) according to any of the preceding claims, further comprising a spectrophotometric measurement compartment (26) associated with the robotic arm (11) and the incubation ring (16), wherein the spectrophotometric measurement compartment is configured to measure predefined biomarkers of interest inside the biomedical samples in real-time.

13. An automated laboratory diagnostic system (30) enabling a pre-analytical sample treatment on biomedical samples before the biomedical samples treated with the pre-analytical sample treatment access an automated laboratory analyzer (40), the automated laboratory diagnostic system (30) comprising:
a sample preparation module (10) according to any one of claims 1 to 12; and
an automated laboratory analyzer (40) comprising at least one position (41) for the arrangement of the sample preparation module (10), wherein the automated laboratory analyzer (40) is configured to analyze the biomedical samples treated with the pre-analytical sample treatment.

14. The automated laboratory diagnostic system (30) according to claim 13, wherein the sample preparation module (10) interacts with the automated laboratory analyzer (40) with only a change of a track line interface of the automated laboratory analyzer (40) and/or other non-assay relevant hardware and/or software implementations of the automated laboratory analyzer (40).

15. A method (70) for enabling a pre-analytical sample treatment on biomedical samples before the biomedical samples treated with the pre-analytical sample treatment access an automated laboratory analyzer (40), the method comprising:
providing a sample preparation module (10) according to any of the claim 1 to 12;
conducting (S71) the pre-analytical sample treatment on the biomedical samples by employing the provided sample preparation module (10);
obtaining (S72) biomedical samples treated with the conducted pre-analytical sample treatment; and
analyzing (S73) the obtained biomedical samples by employing the automated laboratory analyzer (40).
